# EUROPEAN PATENT APPLICATION

(11) **EP 2 002 975 A2**
(43) Date of publication of application: **17.12.2008**
(21) Application number: 07740916.7
(22) Date of filing: 03.04.2007
(51) Int. Cl.: B32B 37/00, B32B 27/32, G09F 3/02

(54) **PROCESS FOR PRODUCING PRINT LAMINATE, PRINT LAMINATING MACHINE AND PRINT LAMINATE**

(30) Priority: 03.04.2006 JP 2006102413
(71) Applicant: J-Film Corporation, Tokyo, 101-0031 (JP)
(72) Inventor: MIURA, Akira; c/o J-Film Corporation, Chiba 287-0102 (JP); SAKOGAWA, Koichi, c/o J-Film Corporation, Chiba 287-0102 (JP); UESAKA, Koji, c/o J-Film Corporation, Tokyo 101-0031 (JP)
(74) Representative: Vossius & Partner
(86) International application number: PCT/JP2007/057480
(87) International publication number: WO 2007/116886

(57) **Abstract**

Providing a method for producing a print laminate, in which a print laminate having excellent smoothness of the outermost layer of a product, high gloss and high texture on appearance of a printed paper is obtained. A thermoplastic resin layer (A) unstretched or having a stretching ratio of 1.2 times or less is thermocompression bonded on a printed paper (D) through a bonding layer (C) to form a laminate, and a smoothening operation for smoothening the thermoplastic resin layer (A) side is then conducted. The thermoplastic resin layer (A) preferably comprises a propylene random copolymer having a melting point of from 110 to 156°C.

## Description

### Technical Field

The present invention relates to a method for producing a print laminate, a print laminating machine and a print laminate, and relates to a method for producing a print laminate comprising a printed paper-like material having a thermoplastic resin heat-laminated on a printed side thereof, a print laminating machine and a print laminate. More particularly, it relates to a method for producing a print laminate and a print laminating machine, in which a surface of a printed paper is protected and design properties in appearance such as gloss and texture of the printed paper are improved, by covering the printed paper with a thermoplastic resin film for lamination, and a print laminate.

### Background Art

In recent years, a method for giving gloss, and additionally giving water resistance and oil resistance, thereby protecting a printed side, by laminating a thermoplastic resin film on a printed side of magazines, labels, advertisings or the like is widely employed. Such a treatment is generally called gloss processing in the art of this field.

Those gloss processing include a coating method of applying an ultraviolet-curable liquid resin to a printed side to give gloss to the surface, and a print laminating method of thermocompression bonding a thermoplastic resin film having a bonding layer exhibiting thermoadhesive properties on a surface.

In such thermoplastic resin films, a method is generally taken, in which a film excellent in protective property and a thermoplastic resin which forms a bonding layer are extrusion laminated by extruding the thermoplastic resin layer to the film to form a laminated thermoplastic resin film for lamination, and then the bonding layer side of the thermoplastic resin film is heat-laminated to a printed paper to form a protective layer.

Because of having smoothness and excellent gloss, a biaxially stretched polypropylene (OPP) is widely used as a base layer of those thermoplastic resin films for lamination.

However, the coating method can impart gloss, but has a disadvantage that an effect of protecting a print as a protective layer is not obtained. On the other hand, the print laminating method can impart water resistance and oil resistance and can protect a print. However, for example, when such a biaxially stretched polypropylene is used, there are disadvantages that gloss of the biaxially stretched polypropylene is lost due to shrinkage by heating when laminated on a printed paper, clear printing contents are blurred, and its value is impaired.

To eliminate the disadvantages, using a polypropylene resin film having a smectic crystal structure is proposed (Patent Document 1). However, a polypropylene of a smectic structure cannot generally be produced by production facilities used in the art of this afield, and cannot be regarded as an industrial technique.

Furthermore, in applying lamination to a printed paper, a laminate is generally pressed by heated metal rolls. In this case, scratches by metal rolls are liable to be transferred to a polypropylene layer as a surface layer. For this reason, an attempt to laminate a thermofusible resin as a bonding layer on a polypropylene film and adjust a refractive index to a specific range, thereby obtaining a print laminate having excellent transparency is proposed (Patent Document 2). However, in this case, glossiness of a print laminated product could not be satisfied.

Even in the case of using a thermoplastic resin film for lamination using a base layer having high smoothness, the surface of a printed paper itself is not completely smooth due to inequalities of paper fibers or inequalities of a printing ink. As a result, inequalities correspond to inequalities and waves of a substrate are formed on the surface of a thermoplastic resin film which is heat-laminated. Therefore, it is impossible to make a surface completely smooth, and gloss obtained had a limit.
Patent Document 1: JP-A-7-156350
Patent Document 2: JP-A-6-126914

### Disclosure of the Invention

### Problems that the Invention is to Solve

In view of the above conventional arts, objects of the present invention are to provide a method for producing a print laminate and a print laminating machine, that can produce an excellent print laminate having unprecedented glossiness as a smooth surface even on a printed paper having a certain extent of inequalities and waves on the surface thereof, and a print laminate.

### Means for Solving the Problems

The present invention has been made as a result of earnest studies in view of such problems, and provides a method for producing a print laminate, which comprises thermocompression bonding a thermoplastic resin layer (A) unstretched or having a stretching ratio of 1.2 times or less to a printed paper (D) through a bonding layer (C) to form a laminate, and thereafter conducting a smoothening operation for smoothening the thermoplastic resin layer (A) side, and a method for producing a print laminate, which comprises thermocompression bonding a thermoplastic resin layer (A) unstretched or having a stretching ratio of 1.2 times or less containing a propylene random copolymer having a melting point of from 110 to 156°C to a printed paper (D) through a bonding layer (C) to form a laminate, and thereafter conducting a smoothening operation for smoothening the thermoplastic resin layer (A) side.

The present invention further provides the method for producing a print laminate, wherein the smoothening operation is conducted by contacting with a roll, a belt or a flat plate; the method for producing a print laminate, wherein the bonding layer (C) contains an ethylene polymer having a melting point of from 53 to 100°C as a main component; and the method for producing a print laminate, wherein an intermediate layer (B) containing a thermoplastic resin is contained between the thermoplastic resin layer (A) and the bonding layer (C).

Furthermore, the present invention provides a print laminating machine comprising a hot roll; a feed roll; an endless stainless plate bridged over the hot roll and the feed roll; a nip roll for thermocompression bonding a material to be laminated, between the nip roll and the hot roll through the stainless plate; holding means for smoothening the surface of the material to be laminated by holding the material to be laminated after thermocompression bonding between the hot roll and the nip roll in a state of contacting with the surface of the stainless plate; and cooling means for lowering the temperature of the material to be laminated at the time of the completion of smoothening.

Moreover, the present invention provides a laminate containing a printed paper layer (D), a bonding layer (C) and a thermoplastic resin layer (A) unstretched or having a stretching ratio of 1.2 times or less, in this older, wherein the laminate is: a print laminate which comprises the thermoplastic resin layer (A) containing a propylene random copolymer having a melting point of from 110 to 156°C; the print laminate which comprises the bonding layer (C) containing an ethylene copolymer having a melting point of from 53 to 100°C as a main component; the print laminate which comprises the bonding layer (C) containing an ethylene-α-olefin copolymer having a melting point of from 53 to 100°C as a main component; the print laminate wherein an intermediate layer (B) containing a thermoplastic resin is contained between the thermoplastic resin layer (A) and the bonding layer (C) ; and the print laminate which comprises a film of the thermoplastic resin layer (A), the bonding layer (C) and the intermediate layer (B) interposed according to need, integrally laminated by an inflation molding method.

### Advantage of the Invention

According to the present invention, a method for producing a print laminate, a print laminating machine and a print laminate, capable of obtaining a printed paper having excellent smoothness of an outermost layer, high gloss and high texture in appearance, can be obtained.

### Brief Description of the Drawings

Fig. 1 is a side view showing an example of the print laminate of the present invention.
Fig. 2 is a side view showing an example of an apparatus for obtaining the print laminate of the present invention.
Fag.3 is a side view showing other example of an apparatus for obtaining the print laminate of the present invention.
Fig.4 is a side view showing other example of an apparatus for obtaining the print laminate of the present invention.

### Description of Reference Numerals and Signs

A: Thermoplastic resin layer
B: Intermediate layer
C: Bonding layer
D; Printed paper layer
1 : Hot roll
2: Nip roll
3: Pressure roll
4: Nip roll
5: Hot roll
6: Feed roll
7: Stainless plate
8: Nip roll
9: Cooling part
10: Tension roll
11: Delivery roll

### Best Mode for Carrying out the Invention

The method for producing a print laminate of the present invention is to obtain a print laminate having excellent gloss by thermocompression bonding a thermoplastic resin layer (A) unstretched or having a stretching ratio of 1.2 times or less to a printed paper layer (D) through a bonding layer (C) to form a laminate, and thereafter smoothening the thermoplastic resin layer (A) side. The details are specifically described below.

The thermoplastic resin layer (A) is laminated on the surface of a printed paper. In general, the bonding layer (C) comprising a thermoplastic resin having low melting point and excellent thermoadhesive properties, and according to need, an intermediate layer (B) capable of making molding stable, are laminated on the thermoplastic resin layer (A). A beautiful print laminate free of blur can easily be produced by providing the bonding layer (C) having excellent thermoadhesive properties.

The method for print laminating the thermoplastic resin layer (A) includes a method in which the bonding layer (C) having thermoadhesive properties is laminated on the thermoplastic resin layer (A) by extrusion lamination process, and the resulting laminate is then heat-laminated on a printed paper; and a method in which in film-forming an unstretched thermoplastic resin film or a stretched thermoplastic resin film (A) having a stretching ratio of 1.2 times or less by an extrusion molding method, a multilayered film of a thermoplastic resin having the bonding layer (C) comprising a resin having thermoadhesive properties is prepared by a co-extrusion molding method, and the multilayered film is then heat-laminated on a printed paper. Thus, the thermoplastic resin layer (A) can be laminated on a printed paper by the known techniques.

### (Molding method of thermoplastic resin layer (A))

In the present invention, a propylene random copolymer having a melting point of from 110 to 156°C is used as a thermoplastic resin of the thermoplastic resin layer (A). The thermoplastic resin layer (A) is unstretched or has a stretching ratio of 1.2 times or less.

Laminatability is improved by using a propylene random copolymer having a melting point of from 110 to 156°C, and gloss is improved by using the thermoplastic resin layer (A) unstretched or has a stretching ratio of 1.2 times or less. In particular, it is possible to further increase gloss by contacting a mirror surface or a material having high smoothness with the surface of the thermoplastic resin layer (A) in the state of applying heat.

An unstretched thermoplastic resin film or a stretched thermoplastic resin film of 1.2 times or less does not undergo orientation, or undergoes weak orientation. Therefore, rearrangement of molecules is easy, and it is easy to transfer a surface state of a mirror surface or a material having high smoothness to be contacted with, and to deform into a surface state having high smoothness.

For example, an inflation film-forming method or a T-die film-forming method can be selected as a film-forming method satisfying those.

In general, in the inflation molding method, circumferential length of a tubular film obtained is set to about several times a circumferential length of a ring die. This ratio is called a blow ratio, and used to control processing stability, uneven thickness precision and properties. This is included in stretching in broad sense. However, the process is under the state near a molten state, and the advantage of the present invention is not affected. Therefore, the blow ratio is not limited in the present invention. However, a molding method involving a stretching step having a stretching ratio of 1.2 times or more and producing a general stretched polypropylene cannot be selected.

A method for laminating the thermoplastic resin layer (A) and the bonding layer (C) is not particularly limited, and the known methods such as a coextrusion inflation method, a coextrusion T-die method or an extrusion laminating method can be employed. The coextrusion inflation method is economical and is preferred.

The laminate film of the thermoplastic resin layer (A) and the bonding layer (C) of the present invention can be obtained by inflation molding using plural extruders and coextrusion multilayer ring dies.

The laminate film can be obtained by a method that two layers of the thermoplastic resin layer (A) and the bonding layer (C), or preferably three layers further including the intermediate layer (B) for increasing stability at the time of inflation molding, are melted in the respective extruders, extruded from coextrusion multilayer ring dies in a tubular form, cooled and solidified by blowing air supplied from a blower to molten tubes from air-cooling rings, passed through guide plates, folded with pinch rolls and taken off with a feed-off machine.

Any side of the laminate film of the thermoplastic resin layer (A), the intermediate layer (B) and the bonding layer (C) can be formed as the outside of a tube, but it is preferred that the bonding layer (C) is outside. It is general that the thickness ratio is in a range of protective layer (A) : intermediate layer (B) :bonding layer (C) = (5 to 15) : (5 to 15) : (5 to 15), and preferably (10 to 15) : (5 to 10) : (5 to 10) .

A molding machine, a cooling ring, a blower, a guide plate, a pinch roller, a feed-off machine of a film and the like, that can be used in the molding method are any ones generally used.

The conditions of molding the laminated thermoplastic resin film for lamination in the present invention are not particularly limited so long as the properties specified in the present invention are obtained. The molding temperature is from 170 to 250°C, and preferably from 170 to 200°C. The molding rate is from 5 to 50 m/min, and preferably from 10 to 40 m/min. It is particularly preferred that a corona treatment is applied to the bonding layer (C) side.

### [1] Material of thermoplastic resin layer (A)

The thermoplastic resin constituting the thermoplastic resin layer (A) in the present invention includes a propylene random copolymer. The propylene random copolymer is described hereinafter.

### (1) Monomer structure

The propylene random copolymer used in the present invention is desirably a random copolymer of propylene and an α-olefin other than propylene, in which a structural unit derived from propylene is the main component.

The α-olefin used as a comonomer is preferably ethylene or an α-olefin having from 4 to 18 carbon atoms. The α-olefin may be used alone or as combinations of two or more kinds.

Specific examples include ethylene, 1-butene, 1-pentene, 1-hexene, 1-octene, 1-heptene, 4-methyl-pentene-1, 4-methyl-hexene-1 and 4,4-dimethylpentene-1. Of those, ethylene is most preferred.

The amount of the α-olefin unit in the propylene·α-olefin copolymer is generally from 0 .5 to 12% by weight, and preferably from 1 to 10% by weight. In case that the α-olefin unit is large, rigidity of a film is decreased, and scratches are liable to be formed. In case that the unit is too small, flexibility and transparency are impaired. The propylene unit and the α-olefin unit can be measured by ¹³C-NMR method.

### (2) Resin properties

The propylene random copolymer used in the present invention desirably has the following properties.

### (a) Melt flow rate (MFR)

MFR (230°C, 21.18 N load) of the propylene random copolymer is from 1 to 20 g/10 min, and preferably from 2 to 20 g/10 min. Measurement of MFR is conducted according to JIS-K6921-2: 1997 Appendix (230°C, 21.18 N load).

### (b) Melting peak temperature (Tm)

The propylene random copolymer used in the present invention desirably has a melting peak temperature (Tm) by a differential scanning calorimeter (DSC) of from 110 to 156°C, preferably from 110 to 145°C, more preferably from 120 to 140°C, and further preferably from 125 to 135°C. By adjusting the melting point to such a range, transparency is excellent, and heat resistance and transferability are excellent in smoothening the outermost surface by pressing with a mirror surface or a material having high smoothness under the state of applying heat in the post-step.

In case that the melting peak temperature is less than the above range, rigidity is decreased, and preferred blocking resistance is not obtained. On the other hand, in case that the melting peak temperature exceeds the above range, flexibility is impaired.

In case that the melting peak temperature is relatively high, there is a case that high temperature is required in a smoothening step. On the other hand, when the smoothening step is conducted at high temperature, there is an advantage that adhesive intensity to the printed paper layer (D) is improved. In particular, this advantage is remarkable at a melting peak temperature in a range of from 145 to 156°C.

### (c) Weight average molecular weight (Mw)/number average molecular weight (Mn) ratio

The ratio (Mw/Mn) of a weight average molecular weight (Mw) and a number average molecular weight (Mn) of the propylene random copolymer used in the present invention is preferably from 1.5 to 3.5, and more preferably from 1.8 to 3.3. The measurement of Mw/Mn can be conducted by gel permeation chromatography (GPC).

### (3) Polymerization catalyst

A polymerization catalyst for producing the propylene random copolymer used in the present invention is not particularly limited, but a single site catalyst is preferred. The propylene random copolymer obtained by such a catalyst has excellent transparency and melting properties capable of conducting inflation molding.

The single site catalyst indicates a catalyst substantially constituted by homogeneous polymerization active sites, and specifically means, for example, a polymerization catalyst constituted of a metallocene transition metal compound (so-called Kaminsky catalyst) or non-metallocene transition metal compound (Brookhart catalyst, phenoxyimine catalyst or the like), and a co-catalyst (methyl aluminoxane, boron compound or the like).

The most preferred single site catalyst is a polymerization catalyst constituted of a metallocene transition metal compound and a co-catalyst.

(4) Such a propylene random polymer can be selected from commercially available products as a propylene copolymer by a metallocene catalyst and used. The commercially available product includes a propylene-ethylene random copolymer, KINTEC, trade name, manufactured by Japan Polypropylene Corporation.

### (5) Additive

### (a) Nucleating agent

In the propylene random copolymer of the present invention, a nucleating agent such as dibenzylidene sorbitol derivatives, organic phosphoric acid metal salts, organic carboxylic acid metal salts or high density polyethylene may be added to the above component. Transparency can be improved by compounding the nucleating agent. It is desirable that the addition amount is from 0 to 5% by weight, and preferably from about 0 to 3% by weight. Processing stability can simultaneously be improved by the addition of a high density polyethylene.

### (c) Other component

Other additional optional components can be compounded with the propylene random copolymer of the present invention in a range that the advantage of the invention is not significantly impaired. Examples of the optional component includes antioxidants, transparentizing agents, lubricants, antiblocking agents, antistatic agents, antifogging agents, neutralizing agents, metal deactivators, colorants and fluorescent brightening agents, used in general polyolefin resin materials.

### (6) Preparation of resin composition

The additives are compounded according to need at the optional stage in the preparation of a resin composition. Melt kneading is conducted such that each component of powdery form, pellet form or the like is kneaded using a kneading machine such as a single- or twin-screw extruder, Banbury mixer, a kneader blender, a brabender plastgraph, a small-sized batch mixer, a continuous mixer or a mixing roll. The kneading temperature, is generally from 180 to 270°C.

### [2] intermediate layer (B)

To obtain a film of the thermoplastic resin layer (A) having a layer comprising a resin having thermoadhesive properties by a coextrusion molding method in the present invention, it is preferred that an intermediate layer (B) is provided to impart a function of improving moldability, although not essential.

In the present invention, as the preferred embodiment, the intermediate layer (B) can be interposed between the thermoplastic resin layer (A) and the bonding layer (C) described hereinafter. A function of improving moldability at the time of film molding can be imparted by providing the intermediate layer (B).

The intermediate layer (B) is to impart stability of an inflation film-formation, and a polyethylene is particularly preferred. A homopolymer of ethylene, and a copolymer of ethylene and other α-olefin can be used as the polyethylene. Olefin copolymers having from about 3 to 12 carbon atoms such as propylene, butane-1, hexene-1 or octane-1 can be used as the α-olefin. The amount of copolymerization is from 0 to 30% by weight, and preferably from about 0 to 20% by weight. An ethylene·α-olefin copolymer polymerized using the single site catalyst of (c1) described hereinafter is also a preferred material. However, the material having the α-olefin content smaller than the (c1) ethylene·α-olefin copolymer of the bonding layer (C) described hereinafter is used.

The particularly preferred material as the intermediate layer (B) is a high pressure radical polymerization low density polyethylene, an ethylene·α-olefin copolymer polymerized using a single site catalyst or a mixture of those.

other thermoplastic resin can be added to the intermediate layer (B) of the present invention in a range of less than predominant quality.

### [3] Bonding layer (C)

To obtain the thermoplastic resin layer (A) having excellent thermoadhesive properties in the present invention, the bonding layer (C) comprising a resin having thermoadhesive properties is laminated.

This enables a printed paper to be laminated by a heat lamination, method in the post-step.

The material constituting the bonding layer (C) is preferably an ethylene polymer having a melting point of from 53 to 100°C, and an ethylene polymer having a melting point of from 60 to 100°C is more preferred.

The ethylene polymer is preferably (c1) an ethylene·α-olefin copolymer polymerized using a single site catalyst or (c2) an ethylene·vinyl acetate copolymer. It is particularly desired to laminate a resin comprising as a main component an ethylene·α-olefin copolymer having a melting point of from 53 to 100°C, and preferably from 60 to 100°C.

### (c1) Ethylene. α-olefin copolymer polymerized using single site catalyst

The (c1) ethylene·α-olefin copolymer constituting the bonding layer (C) of the thermoplastic resin film for lamination of the present invention is a copolymer of ethylene and an α-olefin having from 3 to 12 carbon atoms, polymerized using a single site catalyst. Copolymers having the following properties (i) to (ii) and further having properties (iii) to (iv) are desirable.

The single site catalyst is as described before. Non-crosslinked metallocene catalysts such as biscyclopentadienylzirconium dichloride or its substitute can be used as the metallocene catalyst.

### (a) Monomer constitution

The α-olefin used as a comonomer of the ethylene·α-olefin copolymer used in the present invention is preferably α-olefins having from 3 to 12 carbon atoms. Specific examples of the α-olefin include propylene, 1-hutene, 1-pentene, 1-hexene and 1-octene. The α-olefin may be alone or as combinations of two or more kinds.

The content of the α-olesin in the ethylene·α-olefin copolymer is preferably from 5 to 40% by weight, and more preferably from 7 to 35% by weight. In case that the content of the α-olefin is small, impact intensity of a film and low temperature heat sealing property are not obtained. In case that the content is too large, anti-blocking property is impaired. The content of α-olefin is measured by ¹³C-NMR method.

### (b) Metallocene type ethylene·α-olefin copolymer

The metallocene type ethylene·α-olefin copolymer can appropriately be selected from commercially available products as a metallocene type polyethylene, and used. Examples of the commercially available product include KERNEL and HARMOREX, manufactured by Japan Polyethylene Corporation, and AFFINITY, manufactured by DuPont Dow. The ethylene·α-olefin copolymer can be used alone or as mixtures of two or more kinds. Furthermore, it is a preferred embodiment to blend other polyethylene, particularly a high pressure low density polyethylene.

### (c) Properties

### (i) Melt flow rate

MFR (190°C, 21.18 N load) of the ethylene·α-olefin copolymer used in the present invention is from 0.1 to 60 g/10 min, and preferably from 1 to 45 g/10 min. When the MFR is less than 0.1 g/10 min, deformation is formed in response to surface inequalities of a printed paper in laminating on the printed paper by a heat lamination method in the post-step, and uniform adhesion becomes insufficient. When the MFR exceeds 60 g/10 min, moldability becomes poor. The measurement of MFR is conducted according to JIS-K6921-2: 1997, Appendix (190°C, 21.18 N load).

### (ii) Density

Density of the ethylene·α-olefin copolymer used in the invention is from 0.870 to 0.910 g/cm³, and preferably from 0. 890 to 0.905 g/cm³. When the density is less than 0.870 g/cm³, a film becomes sticky. Then the density exceeds 0.910 g/cm³, adhesion suitability such as adhesive intensity to a paper substrate or the like deteriorates, which is not preferred. The density is measured according to the case of a low density polyethylene of JIS-K6922-2: 1997, Appendix (23°C).

### (iii) Ratio of average molecular weight (Mz) and number average molecular weight (Mn)

The ratio (Mz/Mn) of Z average molecular weight (Mz) and number average molecular weight (Mn) of the ethylene·α-olefin copolymer used in the present invention, obtained by gel permeation chromatography (GPC) is preferably 8.0 or less, and more preferably 5.0 or less. When the Mz/Mn exceeds 8.0, transparency deteriorates.

### (d) Additive

Other additional optional components can be compounded with the resin component constituting the ethylene·α-olefin copolymer of the present invention in an amount that the advantage of the present invention is not significantly impaired. Examples of the optional components include antioxidants, crystal nucleating agents, transparentizing agents, lubricants, anti-blocking agents, antistatic agents, antifogging agents, neutralizing agents, metal deactivators and fluorescent brightening agents, used in general polyolefin resin materials.

### (c2) Ethylene·vinyl acetate copolymer

As the bonding layer (C) of the thermoplastic resin film 1 for lamination of the present invention, an ethylene·vinyl acetate copolymer can be used, and the ethylene·vinyl acetate copolymer may be obtained by a tubular method or an autoclave method.

The vinyl acetate content of the ethylene·vinyl acetate copolymer is from 3 to 20% by weight, preferably from 5 to 20% by weight, and more preferably from about 10 to 20% by weight. When the vinyl acetate content exceeds this range, tackiness is liable to be generated. When the content is less than this range, adhesion to a paper becomes poor, which is not preferred.

The MFR (230°C, 21.18 N load) is from 1 to 20 g/10 min, and preferably from about 2 to 20 g/10 min. When the MFR exceeds the range, stability of bubbles at the time of molding deteriorates. When the MRF is lower than the range, adhesion to a paper deteriorates, which is not preferred.

Examples of the printed paper constituting the print laminate of the present invention include art papers, coat papers, high quality papers, Japanese papers and synthetic papers. Those printed papers may be any one of a single layer product and a laminate.

The printing method to a printing paper can employ the conventional methods, for example, planographic printing such as lithographic printing or off-set printing; relief printing such as flexo printing or typographic printing; intaglio printing such as etching or gravure printing; and screen printing such as silk screen printing or stencil.

### (Preparation of print laminate and surface smoothening)

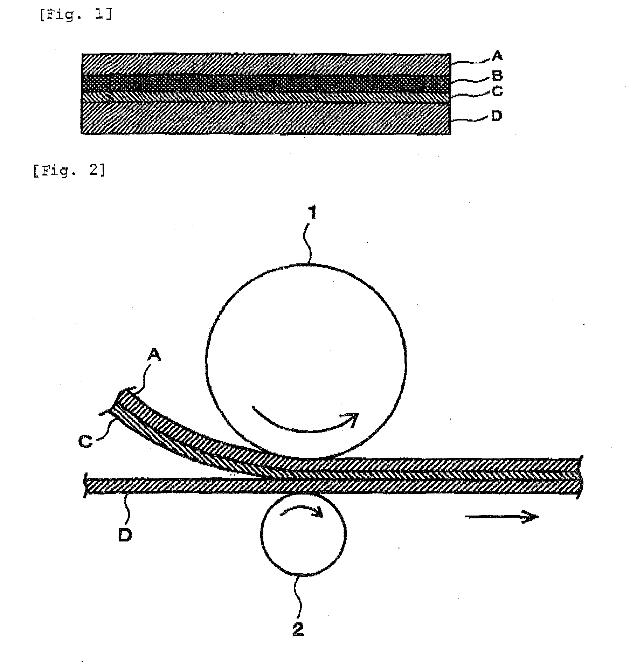

A laminate of the thermoplastic resin layer (A) comprising a thermoplastic resin stretched film having a stretching ratio of 1.2 times or less, that is, a thermoplastic resin unstretched film or a thermoplastic resin stretched film having a stretching ratio of 1.2 times or less and the bonding layer (C), is laminated on the surface of a printed paper layer. A lamination method can be conducted using a print laminating machine constituted of a hot roll 1 and a nip roll 2 as shown in Fig. 2. The print laminating machine is not particularly limited. General print laminating machines such as CYCLONE, manufactured by GBC Film Group Aria; HOT LAMINATOR, manufactured by Matsumoto Kikai Mgf., Co., Ltd.; or HOT LAMINATOR, manufactured by Hamamatsu Co., can be used

After laminating the thermoplastic resin layer (A), the thermoplastic resin layer (A) is contacted with a member having a flat surface to smoothen the surface thereof, and gloss having significantly high texture in appearance can be exhibited. The member having a flat surface includes a roll, a belt and a flat plate.

Appropriate conditions of smoothening depend on the kind of a printed paper to be used and the degree of inequalities of the surface of a printed paper, and individually vary. Therefore, the conditions are not categorically defined. However, some preferred examples are described.

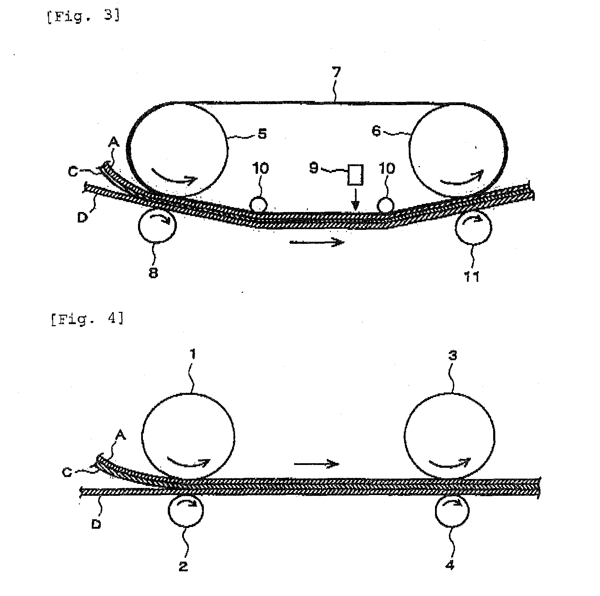

Fig. 3 shows one example of the preferred methods of lamination and smoothening, and is a print laminating machine having two purposes for thermocompression bonding and smoothening. In this print laminating machine, a hot roll 5 and a feed roll 6 are juxtaposed, and an endless stainless plate 7 as a mirror surface or a pressure member having high smoothness is bridged over the rolls.

The hot roll 5 is provided with a nip roll 8 for thermocompression bonding a material to be laminated comprising the thermoplastic resin layer (A) to be laminated, the intermediate layer (B) to be laminated according to need, the bonding layer (C) and the printed paper layer (D), through the stainless plate 7 between the nip roll 8 and the hot roll 5. Tension rolls 10, 10 are arranged in the inside of the stainless plate 7 between the hot roll 5 and the feed roll 6, thereby imparting a given tension to the endless stainless plate 7.

The feed roll 6 is provided with a delivery roll 11 for holding the material to be laminated after thermocompression bonding in a given distance in a state of contacting with the surface of the stainless plate 7 and then delivering the material to be laminated from the stainless plate 7. As a result, the material to be laminate which is thermocompression bonded through the stainless plate 7 between the hot roll 5 and the nip roll 8 is delivered to a right direction as shown in Fig. 3 while contacting with the surface of the stainless plate 7 between the nip roll 8 and the delivery roll 11. During this process, smoothness of the stainless plate 7 is transferred to the surface of the thermoplastic resin layer (A), thereby smoothening the surface.

The inside of the stainless plate 7 has a cooling part 9 for lowering temperature of the material to be laminated at the time of completion of smoothening. A specific cooling method in the cooling part 9 is preferably a method of pouring water from the inside of the stainless plate 7.

In the lamination step using such a print laminating machine, temperature of the hot roll is preferably high as high adhesive intensity between a film and the printed paper D can be obtained. Specifically, the temperature is preferably 90°C or higher, and more preferably 100°C or higher. When the temperature is 120°C or higher, adhesive intensity can sufficiently be obtained, and this is particularly preferred. Furthermore, a certain degree of low temperature is preferred because adverse influence such as deformation of a paper can be suppressed. Specifically, 180°C or lower is preferred, and 160°C or lower is more preferred. 140°C or lower is particularly preferred because disadvantage such as curling of a printed paper can be suppressed.

A method for adjusting temperature is not particularly limited, and the temperature can be adjusted by the known methods such as heating with a band heater while measuring with a thermocouple.

Nip pressure at the time of thermocompression bonding becomes balance of the temperature of a hot roll and the state of a printed paper, and is therefore not categorically defined. A certain degree of high pressure is preferred. Specifically, 1 kgf/cm or more is preferred, 3 kgf/cm or more is more preferred, and 10 kgf/cm or more is still more preferred. 30 kgf/cm or more is particularly preferred because sufficient adhesive intensity can be obtained.

In the print laminating machine shown in Fig. 3, the print laminate which is laminated after passing a hot roll is held while the thermoplastic resin layer (A) contacts the endless stainless plate 7 as a mirror surface or a pressure member having high smoothness, and the surface smoothness is transferred at this time, thereby imparting superior gloss feeling. The temperature of the stainless plate at this time is preferably high because transfer of smoothness proceeds well.

Specifically, the same temperature as that of the hot roll of the lamination step is preferred. When the apparatus of Fig. 3 is used, the stainless plate 7 can be held in an extent that the temperature lowers several °C by heat release after the stainless plate 7 is separated from the hot roll 5, and this is preferred. Time from thermocompression bonding to cooling with the cooling part 9 is determined by a ratio of length between the parts and processing rate. The time is preferably long because smoothening proceeds with the increase of the holding time. Specifically, 0.1 sec or longer is preferred, 0.5 sec or longer is more preferred, and 1 sec or longer is further preferred. When maintained for 2 sec or longer, sufficient smoothening can proceed, which is particularly preferred.

Furthermore, in this procedure, smoothening is obtained when time for applying pressure is short and longer time is taken in a pressure-free state. Therefore, it is preferred to take particularly longer time. Length from the nip part to the cooling part 9 is preferably long because long maintenance time is obtained even though processing rate is increased. Specifically, 50 cm or longer is preferred, and design of 100 cm or longer is more preferred. When 150 cm or longer can be ensured, there is high possibility to increase processing rate, and this is particularly preferred.

As other example of smoothening, a method of laminating the thermoplastic resin layer (A) on the printed paper layer (D) using an apparatus comprising a roll pair of the hot roll 1 and the nip roll 2, for laminating the thermoplastic resin layer (A) on the surface of the printed paper layer (D), and a pair of a pressure roll 3 and a nip roll 4 for smoothening provided in series, as shown, in Fig. 4, and passing through a roll pressure step as a smoothening step can be used.

Surface gloss of the print laminate of the present invention is preferably 96% or more. Glossiness is measured at an angle of 20° according to JIS K8741.

### Examples

The present invention is specifically described below according to the Examples, but the invention is not limited by those Examples. Extrusion lamination, processability, properties of a laminate film and evaluation methods of properties of a print laminate in the Examples and resins used in the Examples are as follows.

### 1) Properties of print laminate

(1) Glossiness (gloss): Values obtained measuring glossiness (glossiness of incident light and reflection light at an angle of 20°C) of a printed part of a print laminate with a gloss measuring instrument UGV-5DP (trade name), manufactured by Suga Test Instruments Co., Ltd., according to JIS K8741 were indicated.

(2) Glossiness (visual) : Seven testers made relative evaluation by the following standards as the print laminate of Comparative Example 1 is ○, and the median value is obtained.

○ : Gloss feeling is imparted to an original printed paper.
○+ : Gloss feeling is strongly imparted to an original printed paper.
⊚ : Gloss feeling is strongly imparted to an original printed paper, and glistening surface is observed.
⊚+ : Gloss feeling is strongly imparted to an original printed paper, and glistening surface is observed, emphasizing printed color
⊚++ : Gloss feeling is strongly imparted to an original printed paper, glistening surface is observed, emphasizing printed color, and sense of depth is felt
⊚+++ : Gloss feeling is strongly imparted to an original printed paper, glistening surface is observed, emphasizing printed color, and sense of depth is strongly felt.

(3) Adhesive intensity: A print laminate product was cut into a test piece having a width of 25 mm and a length of 100 mom, and 50 mm in a lengthwise direction was peeled by hand. Value of tensile intensity peeled at a tensile rate of 300 mm/min in a 180° direction with a tensile tester, manufactured by Shimadzu Corporation, was then indicated.
2) Resin used and molding machine
(1) Resin
   WMB3. Propylene random copolymer by a single site catalyst, manufactured by Japan Polypropylene Corporation, MFR=B g/10 min, melting point=142°C, Mw/Mn=2.8
   WaX6: Propylene random copolymer by a single site catalyst, manufactured by Japan Polypropylene Corporation, MFR=2 g/10 min, melting point=125°C, Mw/Mn=2.8
   Wok1250: Propylene random copolymer by a single site catalyst, manufactured by Japan Polypropylene Corporation, MFR=7 g/10 min, melting point=135°C, Mw/Mn=2.8
   WEG7T: Propylene random copolymer by a single site catalyst, manufactured by Japan Polypropylene Corporation, Mar=1.4 g/10 min, melting point=154°C, Mw/Mn=2.8
   LF280: High pressure low density polyethylene, manufactured by Japan Polyethylene Corporation, MFR=0.6 g/10 min, density=0.928 g/cm³, melting poilit=115°C
   KF290: Ethylene·α-olefin copolymer by a single site catalyst, manufactured by Japan Polyethylene Corporation, MFR=2 g/10 min, density=0.925 g/cm³, melting point=120°C
   KF360T: Ethylene·α-olefin copolymer by a single site catalyst, manufactured by Japan Polyethylene Corporation, MFR=2 g/10 min, density=0.903 g/cm³, melting point=90°C
   XM138: Ethylene·α-olefin copolymer by a single site catalyst, manufactured by Japan Polyethylene Corporation, MFR=40 g/10 min, density=0.895 g/cm³, melting point=70°C
   KS340T: Ethylene·α-oletin copolymer by a single site catalyst, manufactured by Japan Polyethylene Corporation, Mar=3.5 g/10 min, density=0.880 g/cm³, melting point=60°C
   KC650T: Ethylene·α-olefin copolymer by a single site catalyst, manufactured by Japan Polyethylene Corporation, Mar=20 g/10 min, density=0.888 g/cm³, melting point=55°C
   LV570: Ethylene·vinyl acetate copolymer (EVA), manufactured by Japan Polyethylene Corporation, MFR15 g/10 min, vinyl acetate (VA) content=20% by weight, melting point=83°C
   KMB32F: A polyethylene masterbatch containing anti-blocking agent

(2) Inflation three-layer coextrusion molding machine
   Three-kind three-layer coextrusion molding machine, manufactured by Sumijyu Modern Machinery Co., Ltd.
   Diameter of extruder: ∅ 65 mm
   Aperture of die: 350 mm
   Preset temperature of extruder: 180°C
   Preset temperature of die: 190°C
(3) T-die three-layer coextrusion molding machine
   Three-kind three-layer coextrusion molding machine, manufactured by Mitsubishi Heavy Industries, Ltd.
   Diameter of extruder: ∅ 65 mm (layer C side)/∅ 115 mm (layer B side)/∅ 65 mm (layer A side)
   Width of die: 2,400 mm
   Preset temperature of extruder: 220°C
   Preset temperature of dine; 220°C

(4) Extrusion lamination molding machine
   One-kind one-layer single-layer coextrusion molding machine, manufactured by Sumijyu Modern Machinery Co., Ltd.
   Diameter of extruder: ∅ 65 mm

### Example 1

As shown in Table 1, a propylene random copolymer (WMB3, manufactured by Japan Polypropylene Corporation) was used as layer A of 5 µm, 50 parts by weight of a linear low density ethylene (LF280, manufactured by Japan Polyethylene Corporation) and 50 parts by weight of a linear low density ethylene (KF290, manufactured by Japan Polyethylene Corporation) was used as layer B of 15 µm, and a linear low density ethylene (KF360T, manufactured by Japan Polyethylene Corporation) having compounded therewith an anti-blocking agent was used as layer C of 5 µm. Film formation was conducted with an inflation coextrusion molding machine as the layer A was at an inner layer side and the layer C was at an outer layer side.

It was adjusted so as to be a total thickness of 25 µm with the above layer ratio at an extrusion rate of 100 kg/H and a tube width of 800 mm, corona treatment was applied to the C layer side in in-line, and trimming was conducted by an in-line slit to obtain a film product having a width of 780 mm as a final product. Stretching step was not passed at the time of the inflation molding, and therefore, a thermoplastic resin unstretched film was obtained.

The layer C side of the laminate film obtained and an off-set printed art paper were heat laminated at a roll temperature of 100°C and a nip pressure of 2 kgf/cm in linear pressure by an apparatus of a system shown in Fig. 2.

Thereafter, the heat laminated product was cut into an A4 size, and placed on a base comprising an A4 size stainless plate having a thickness of 10 mm with the film side up. An A4 size mirror-polished stainless plate having a thickness of 10 mm adjusted to 100°C was placed on the product, a weight having the total road of 200 kgf was further placed thereon to apply pressure, and the state was held for 10 seconds. Thereafter, the weight was removed, water was poured to the stainless plate to cool to 60°C. The stainless plate was removed to obtain a print laminate. As shown in the Table, it could be confirmed that appearance gloss was excellent, adhesive intensity to the printed art paper was sufficiently high, and practically excellent quality was possessed.

### Example 2

An inflation film product was obtained in the same manner as in Example 1.

The layer C side of the laminate film obtained and an off-set printed art paper were superimposed, and processed by an apparatus of a system shown in Fig. 4.

Heat lamination and surface smoothening were conducted under first hot rolling conditions for the purpose of thermocompression bonding that a roll temperature was 100°C and a nip pressure was 2 kgf/cm in linear pressure, and second hot rolling conditions for the purpose of smoothening that a roll temperature was 100°C, a nip pressure was 2.0 kgf/cm in linear pressure, and a speed was 30 m/min, thereby obtaining a print laminate. It could be confirmed that the print laminate obtained had excellent appearance gloss, had sufficiently high adhesive intensity to the printed art paper, and had practically excellent quality, as shown in the Table.

### Example 3

A print laminate was obtained in the same manner as in Example 2, except that an apparatus of a system shown in Fig. 4 was used, and the second hot rolling conditions for the purpose of smoothening were changed such that the roll temperature was 100°C and the nip pressure was 2.2 kgf/cm in linear pressure. The evaluation results are shown in the Table.

By changing the linear pressure to the condition 1.1 times larger than the first hot roll, smoothening proceeded, and gloss feeling on appearance of the print laminate could be increased.

### Example 4

An inflation film product was obtained in the same manner as in Example 1.

The layer C side of the laminate film obtained and an off-set printed art paper were subjected to heat lamination and surface smoothening by an apparatus of a system shown in Fig. 3 under the conditions that a roll temperature was 100°C, a nip pressure was 2 kgf/cm, a length from a nip part to a cooling part was 80 cm, and a speed was 30 m/min, and a print laminate could be obtained.

It could be confirmed that the print laminate obtained had excellent appearance gloss feeling, had sufficiently high adhesive intensity to the printed art paper, and had practically excellent quality, as shown in the Table.

### Example 5

Temperature of a print laminate was elevated in the same manner as in Example 4, except that the hot roll temperature and the stainless plate temperature were changed to 130°C. As a result, smoothening proceeded, and gloss feeling on appearance of the print laminate could be increased.

### Example 6

A print laminate was obtained in the same manner as in Example 4, except that a length from the nip part to the cooling part was changed to 200 cm. The evaluation results are shown in Table 1. By increasing the length from the nip part to the cooling part, contact time was prolonged, smoothening proceeded, and gloss feeling on appearance of the print laminate could be increased.

### Example 7

A print laminate was obtained in the same manner as in Example 4, except that the propylene random copolymer of layer A was changed to WXK125, manufactured by Japan Polypropylene Corporation, and the roll temperature and the stainless plate temperature were changed to 95°C, as shown in Table 2. The evaluation results are shown in Table 2.

By using a propylene random copolymer having a low melting point in layer A, even at low roll temperature, similar to Example 4, glistening was observed on the surface of the original printed paper to which gloss feeling was strongly imparted, and an effect of emphasizing printed colors was obtained.

### Example 8

A print laminate was obtained in the same manner as in Example 4, except that the propylene random copolymer of layer A was changed to WFX6, manufactured by Japan Polypropylene Corporation, and the roll temperature and the stainless plate temperature were changed to 90°C, as shown in Table 2. The evaluation results are shown in Table 2.

By using a propylene random copolymer having a lower melting point in layer A, even at the roll temperature lower than Examples 4 and 7, glistening was observed on the surface of the original printed paper to which gloss feeling was strongly imparted, and an effect of emphasizing printed colors was obtained.

### Example 9

A print laminate was obtained in the same manner as in Example 4, except that an ethylene·α-olefin copolymer XM138 by a single site catalyst, manufactured by Japan Polyethylene Corporation, was used in layer C, as shown in Table 1. The evaluation results are shown in the Table.

By using an ethylene·α-olefin copolymer having lower melting point in layer C, adhesive intensity higher than Example 4 could be obtained.

### Comparative Example 1

A commercially available biaxially stretched film-formation processed polypropylene film (PB 260 (trade name), manufactured by Futamura Chemical Co., Ltd., thickness 15 µm, width 840 mm) was used as a substrate, and a linear low density ethylene (XM138, manufactured by Japan Polyethylene Corporation) was used as layer C. Those are melt extruded from T-die mounted on an extruder at a resin temperature of 240°C, effective die width of 1,100 mm and a thickness of 15 µm.

A biaxially stretched polypropylene film was supplied from a supply part of a substrate of an extrusion laminating apparatus. An anchor coating agent was applied to one side of the film. After drying, ozone treatment was applied between the coated side and a resin layer melt extruded from T-die in a film state, and those were compression laminated with a cooling roll having matte-finished surface and a compression rubber roll. Trimming was conducted with an in-line slit to make a 800 width. Corona discharge treatment was applied to the surface of a resin layer of a laminated film to obtain a laminate film.

In a wound form of a lamination molding machine by which a film having a small thickness of about 30 µm in total thickness is formed, edges are not matched, and thicker edges and bended edges at the time of handling are generated. Therefore, second slit was conducted with a slitter to cut edges, thereby obtaining a laminate film product having a width of 780 mm.

The corona discharge-treated side of the laminate film obtained by a heat laminator of a system shown in Fig. 2 and an off-set printed art paper were laminated under the conditions that a roll temperature is 100°C, a nip pressure is 2 kgf/cm and a speed is 30 m/min to obtain a print laminate. The evaluation results are shown in Table 2.

Thus, a print laminate was obtained by the conventional technique. However, a preferred gloss as indicated in the Examples was not obtained. This is considered due to that smoothening, step is not passed.

### Comparative Example 2

A print laminate was obtained in the same manner as in Example 4, except that an extrusion laminated film using the same biaxially stretched polypropylene as in Comparative Example 1 as a substrate was used in place of the film which was film-formed with an inflation coextrusion molding machine used in Example 1. Glossiness became rather slightly worse than the Comparative Example.

The reason for this is considered to be that even though a prepared smoothening step was passed, because of use of a stretched film, the degree of freedom of deformation of surface is small, and the film did not deform up to smooth conditions.

Comparative Example 1 obtains practical evaluation as an industrial product in the conventional technique. However, although Examples 1 to 6 caused difference in individual example by the visual evaluation, all the testers evaluated that gloss is significantly exhibited as compared with Comparative Example 1.

### Example 10

A print laminate was obtained in the same manner as in Example 5, except that the propylene random copolymer of layer A was changed to WEG7T, manufactured by Japan Polypropylene Corporation, and the roll temperature and the stainless plate temperature were changed to 140°C, as shown in Table 3. The evaluation results are shown in Table 3.

By using a propylene random copolymer having a higher melting point in layer A, heat resistance is improved, and processing could be conducted without melt breakage of a film even at the roll temperature higher than Example 5.

Furthermore, by conducting the processing at high roll temperature, high adhesive intensity could be obtained.

### Example 11

A print laminate was obtained in the same manner as in Example 8, except that an ethylene·α-olefin copolymer KS340T by a single site catalyst, manufactured by Japan Polyethylene Corporation, was used in layer C, as shown in Table 3. The evaluation results are shown in Table 3.

By using an ethylene·α-olefin copolymer having lower melting point in layer C, adhesive intensity higher than Example 8 was obtained even though the thermocompression bonding temperature was 90°C.

### Example 12

A print laminate was obtained in the same manner as in Example 8, except that an ethylene·α-olefin copolymer KC650T by a single site catalyst, manufactured by Japan Polyethylene Corporation, was used in layer C, as shown in Table 3. The evaluation results are shown in Table 3.

By using an ethylene·α-olefin copolymer having lower melting point in layer C, adhesive intensity higher than Example 8 and Example 11 was obtained even though the thermocompression bonding temperature was 90°C.

### Example 13

A print laminate was obtained in the same manner as in Example 4, except that an ethylene·vinyl acetate copolymer LV570, manufactured by Japan Polyethylene Corporation, was used in layer C, as shown in Table 3. The evaluation results are shown in Table 3. Good product could be obtained even though an ethylene·vinyl acetate copolymer was used.

### Example 14

As shown in Table 3, a propylene random copolymer (WMB3, manufactured by Japan Polypropylene Corporation) was used as layer A of 5 µm, 50 parts by weight of a linear low density ethylene (LF280, manufactured by Japan Polypropylene Corporation) and 50 parts by weight of a linear low density ethylene (KF290, manufactured by Japan Polypropylene Corporation) was used as layer B of 15 µm, and a linear low density ethylene (KF360T, manufactured by Japan Polypropylene Corporation) having compounded therewith an anti-blocking agent was used as layer C of 5 µm. Film formation was conducted with a T-die coextrusion molding machine.
It was adjusted so as to be a total thickness of 25 µm with the above layer ratio at an extrusion rate of 250 kg/h, corona treatment was applied to the C layer side in in-line, and trimming was conducted by an in-line slit, followed by cutting into two parts each having 780 mm width. Thus, a film product was obtained as a final product. Stretching step was not passed at the time of the T-die molding, and therefore, a thermoplastic resin unstretched film was obtained. Next, the layer C side of the laminate film obtained and an off-set printed art paper were heat laminated and surface smoothened at a roll temperature of 100°C, a nip pressure of 2 kgf/cm, a length from the nip part to the cooling part of 80 cm, and a speed of 30 m/min by an apparatus of a system shown in Fig. 3. Thus, a print laminate could be obtained. The evaluation results are shown in Table 3. Good print laminate as same as in Example 4 could be obtained.

**[TABLE 1]**

| | | | Example 1 | Example 2 | Example 3 | Example 4 | Example 5 | Example 6 |
|---|---|---|---|---|---|---|---|---|
| Laminate film | Layer A: Inner layer Thickness [µm] | | WOMB3 5 | WMB3 5 | WMB3 5 | WMB3 5 | WMB3 5 | WMB3 5 |
| | Layer B: Intermediate layer Thickness [µm] | | LF280+KF290 (50+50) 15 | LF280+KF290 (50+50) 15 | LF280+KF230 (50+50) 15 | LF280+KF290 (50+50) 15 | LF280+KF290 (50+50) 15 | LF280+KE290 (50+50) 15 |
| | Layer C: outer layer Thickness [µm] | | KF360T 5 | KF360T 5 | KF360T 5 | KF360T 5 | KF360T 5 | KF360T 5 |
| | Lamination method | | Coextrusion inflation | coextrusion inflation | Coextrusion inflation | Coextrusion inflation | Coextrusion inflation | Coextrusion inflation |
| Thermocompression bonding | Thermocompression bonding method | | Fig. 2 | Fig. 4 | Fig. 4 | Fig. 3 | Fig. 3 | Fig. 3 |
| | Thermocompression bonding roll temperature | | 110°C | 100°C | 100°C | 100°C | 130°C | 100°C |
| Smoothening | Smoothening method | | Not shown Heating with stainless plate and pressuring | Fig. 4 Roll compression | Fig. 4 Roll compression | Fig. 3 Metal belt contact | Fig. 3 Metal belt contact | Fig. 3 Metal belt contact |
| | Smoothening conditions | | | Roll temperature 100°C Linear pressure: 2.0 kgf/cm | Roll temperature 100°C Linear pressure: 2.2 kgf/cm | Stainless plate temperature 100°C Pressure: contact under slight pressure Length*: 80 cm | Stainless plate temperature, 130°C Pressure: contact under slight pressure Length*: 80 cm | Stainless plate temperature 100°C Pressure: contact under slight pressure Length*: 200cm |
| Evaluation | Glossiness | Gloss | 102% | 97% | 90% | 98% | 105% | 103% |
| | Gloss | Visual evaluation | ⊚+ | ⊚ | ⊚ | ⊚+ | ⊚+++ | ⊚++ |
| | Adhesive intensity | gf/25 mm | 120 | 830 | 920 | 780 | 940 | 770 |

| | | | | | | | | |
|---|---|---|---|---|---|---|---|---|
| *Length: Length between thermocompression bonding part and cooling part | | | | | | | | |

**[TABLE 2]**

| | | | Example 7 | Example 8 | Example 9 | Comparative Example 1 | Comparative Example 2 |
|---|---|---|---|---|---|---|---|
| Laminate film | Layer A: Inner layer Thickness [µm] | | WXK1250 5 | WFX6 5 | WMB3 5 | Biaxially stretched PP film PB260 | Biaxially stretched PP film PB260 |
| | Layer B: Intermediate layer Thickness [µm] | | LF280+KF290 (50+50) 15 | LF260+KF290 [50+50] 15 | LF280+KF290 (50+50) 15 | | |
| | Layer C: Outer layer Thickness [µm] | | KF360T 5 | KF360T 5 | XM13B 5 | XM138 15 | XM138 15 |
| | Lamination method | | Coextrusion inflation | Coextrusion inflation | Coextrusion inflation | Extrusion lamination | Extrusion lamination |
| Thermocompression bonding | Thermocompression bonding method | | Fig. 3 | Fig. 3 | Fig. 3 | Fig. 2 | Fig. 3 |
| | Thermocompression bonding roll temperature | | 95°C | 90°C | 100°C | 100°C | 100°C |
| Smoothening | Smoothening method | | Fig. 3 Metal belt contact | Fig. 3 Metal belt contact | Fig 3 Metal belt contact | | Fig. 3 Metal belt contact |
| | Smoothening condition | | Stainless plate temperature 95°C Pressure: contact under slight pressure Length*: 80 cm | Stainless plate temperature 90°C Pressure: contact under slight pressure Length*: 80 cm | Stainless plate temperature 100°C Pressure: contact under slight pressure Length*: 80 cm | | Stainless plate temperature 100°C Pressure: Free Length*: 80 cm |
| Evaluation | Glossiness | Gloss | 99% | 99% | 100% | 92% | 91% |
| | Gloss | Visual evaluation | ⊚+ | ⊚+ | ⊚+ | ○ | ○ |
| | Adhesive intensity | gf/25 mm | 680 | 610 | 980 | 900 | 900 |

| | | | | | | | |
|---|---|---|---|---|---|---|---|
| *Length: Length between thermocompression bonding part and cooling part | | | | | | | |

**[TABLE 3]**

| | | | Example 10 | Example 11 | Example 12 | Example 13 | Example 14 |
|---|---|---|---|---|---|---|---|
| Laminate film | Layer A: Inner layer Thickness [µm] | | WEG7T 5 | WFX6 5 | WFX6 5 | WMB3 5 | WMB3 5 |
| | Layer B: Intermediate layer Thickness [µm] | | LF280+KF290 [50+50] 15 | LE28O+KF290 [50+50] 15 | LE280+KF290 (50+50) 15 | LF280+KF290 [50+50] 15 | LF280+KF290 [50+50] 15 |
| | Layer C: Outer layer Thickness [µm] | | KF360T 5 | KS340T 5 | KC650T 5 | LV570 5 | KF360T 5 |
| | Lamination method | | Coextrusion inflation | Coextrusion inflation | Coextrusion inflation | Coextrusion inflation | Coextrusion T-die |
| Thermocompression bonding | Thermocompression bonding method | | Fig. 3 | Fig. 3 | Fig. 3 | Fig. 3 | Fig. 3 |
| | Thermocompression bonding roll temperature | | 140°C | 90°C | 90°C | 100°C | 100°C |
| Smoothening | Smoothening method | | Fig. 3 Metal belt contact | Fig. 3 Metal belt contact | Fig. 3 Metal belt contact | Fig. 3 Metal belt contact | Fig. 3 Metal belt contact |
| | Smoothening condition | | Stainless plate temperature 140°C Pressure: contact under slight pressure Length*: 80 cm | Stainless plate temperature 90°C Pressure: contact under slight pressure Length*: 80 cm | Stainless plate temperature 90°C Pressure: contact under slight pressure Length*: 80 cm | Stainless plate temperature 100°C Pressure: contact under slight pressure Length*: 60 cm | Stainless plate temperature 100°C Pressure: contact under slight pressure Length*: 80 cm |
| Evaluation | Glossiness | Gloss | 106% | 100% | 100% | 97% | 99% |
| | Gloss | Visual evaluation | ⊚+++ | ⊚+ | ⊚+ | ⊚+ | ⊚+ |
| | Adhesive intensity | gf/25 mm | 1020 | 820 | 960 | 680 | 760 |

Although the present invention has been described in detail and by reference to the specific embodiments, it is apparent to one skilled in the art that various changes or modifications can be made without departing the spirit and scope of the present invention.
This application is based on Japanese Patent Application No. 2006-102413 filed on April 3, 2006, the disclosure of which is incorporated herein by reference in its entity.

### Industrial Applicability

The present invention can provide a method for producing a print laminate and a print laminating machine which can produce an excellent print laminate having more glossiness than ever as a smooth surface even on a printed paper having a certain extent of inequalities and waves on the suface, and a print laminate.

## Claims

1. A method for producing a print laminate, which comprises thermocompression bonding a thermoplastic resin layer (A) unstretched or having a stretching ratio of 1.2 times or less to a printed paper (D) through a bonding layer (C) to form a laminate; and thereafter conducting a smoothening operation for smoothening the thermoplastic resin layer (A) side.

2. A method for producing a print laminate, which comprises thermocompression bonding a thermoplastic resin layer (A) unstretched or having a stretching ratio of 1.2 times or less and containing a propylene random copolymer having a melting point of from 110 to 156°C, to a printed paper (D) through a bonding layer (C) to form a laminate; and thereafter conducting a smoothening operation for smoothening the thermoplastic resin layer (A) side.

3. The method for producing a print laminate as claimed in claim 1 or 2, wherein the smoothening operation is conducted by contacting with a roll, a belt or a flat plate.

4. The method for producing a print laminate as claimed in claim 1, 2 or 3, wherein the bonding layer (C) contains an ethylene polymer having a melting point of from 53 to 100°C as a main component.

5. The method for producing a print laminate as claimed in any one of claims 1 to 4, wherein an intermediate layer (B) containing a thermoplastic resin is contained between the thermoplastic resin layer (A) and the bonding layer (C).

6. A print laminating machine comprising:
a hot roll,
a feed roll,
an endless stainless plate bridged over the hot roll and the feed roll,
a nip roll for thermocompression bonding a material to be laminated, between the nip roll and the hot roll through the stainless plate,
a holding means for smoothening the surface of the material to be laminated by holding the material to be laminated after thermocompression bonding between the hot roll and the nip roll in a state of contacting with the surface of the stainless plate, and
cooling means for lowering the temperature of the material to be laminated at the time of the completion of smoothening.

7. A print laminate, which is a laminate comprising a printed paper layer (D), a bonding layer (C) and a thermoplastic resin layer (A) unstretched or having a stretching ratio of 1.2 times or less, in this order, wherein the thermoplastic resin layer (A) contains a propylene random copolymer having a melting point of from 110 to 156°C.

8. The print laminate as claimed in claim 7, wherein the bonding layer (C) contains an ethylene copolymer having a melting point of from 53 to 100°C as a main component.

9. The print laminate as claimed in claim 7, wherein the bonding layer (C) contains an ethylene·α-olefin copolymer having a melting point of from 53 to 100°C as a main component.

10. The print laminate as claimed in claim 7, 8 or 9, wherein an intermediate layer (B) containing a thermoplastic resin is contained between the thermoplastic resin layer (A) and the bonding layer (C).

11. The print laminate as claimed in any one of claims 7 to 10, which comprises a film of the thermoplastic resin layer (A), the bonding layer (C) and the intermediate layer (B) interposed according to need, the film being integrally laminated by an inflation molding method.
